# FASCICULE DE BREVET EUROPEEN

(11) **EP 2 812 228 B1**
(45) Date de publication et mention de la délivrance du brevet: **06.04.2016**
(21) Numéro de dépôt: 13706585.0
(22) Date de dépôt: 30.01.2013
(51) Int. Cl.: B62D 25/08, B60R 13/08, F02B 77/11, B62D 29/00

(54) **BOUCLIER THERMIQUE MUNI D'UNE PATTE D'APPUI CONTRE UN COMPOSANT**
HITZESCHILD MIT EINEM VORSPRUNGSLAGER GEGEN EINEN BAUTEIL
HEAT SHIELD HAVING A PROJECTION BEARING AGAINST A COMPONENT

(30) Priorité: 10.02.2012 FR 1251181
(43) Date de publication de la demande: 17.12.2014
(73) Titulaire: Peugeot Citroën Automobiles SA, 78140 Vélizy Villacoublay (FR)
(72) Inventeur: ROGER, Christophe, F-28350 Saint Lubin des Joncherets (FR)
(74) Mandataire: Fosse, Danièle
(86) Numéro de dépôt international: PCT/FR2013/050180
(87) Numéro de publication internationale: WO 2013/117842

(56) Documents cités:
- EP-A1- 0 751 044
- US-A- 5 831 357
- US-A1- 2007 151 539

## Description

L'invention revendique la priorité de la demande française 1251181 déposée le 10 février 2012 dont le contenu (texte, revendications et dessins) est ici incorpore par référence.

L'invention a trait au domaine de l'automobile, et plus précisément à l'isolation thermique dans les compartiments moteurs des véhicules automobiles.

Les moteurs à combustion interne ont des températures de fonctionnement élevées, en raison des explosions dont ils sont le siège. Les matériaux employés (généralement à faible inertie thermique, tel que les alliages d'aluminium), combinés à des systèmes de refroidissement perfectionnés (à air ou à eau), permettent de maintenir une température moyenne relativement modérée dans le compartiment moteur, inférieure à 100°C.

Certains composants présentent toutefois une température maximale de fonctionnement inférieure à la température moyenne régnant dans le compartiment moteur. L'emplacement de ces composants étant généralement imposé par l'architecture du moteur, l'éloignement des sources de chaleur n'est que rarement possible, et il est par conséquent indispensable d'isoler thermiquement les composants, afin de les protéger de la chaleur émise par le moteur.

On utilise à cet effet des boucliers thermiques réalisés dans des matières rigides résistantes à la chaleur (notamment des matières plastiques résistant à des températures élevées), éventuellement associées à des doublures en matériau isolant, telles que des laines de roche ou de verre). Une solution de ce type est exposée dans le brevet américain US 7 972 708.

Une difficulté inhérente aux boucliers thermiques réside dans leur mode de fixation dans le compartiment moteur, notamment lorsque les composants à protéger ne sont pas des composants de grande série mais correspondent à des séries limitées, pour lesquelles des points de fixation destinés aux boucliers thermiques n'ont pas nécessairement été prévus d'origine dans le compartiment moteur.

Dans ces conditions, un bouclier thermique est généralement fixé en porte-à-faux sur un élément structurel existant du compartiment moteur, sans que l'on puisse garantir une fixation isostatique du bouclier. Celui-ci est par conséquent soumis aux vibrations du compartiment moteur, ces vibrations générant des sollicitations cycliques qui soumettent le bouclier à une fatigue accélérée. Le document US2007151539 divulgue un bouclier thermique pour la protection d'un objet contre la chaleur régnant dans un compartiment moteur tel que décrit parle préambule de la revendication 1.

Un premier objectif est de garantir une bonne fixation d'un bouclier thermique dans un compartiment moteur d'un véhicule automobile.

Un deuxième objectif est d'accroître la tenue en fatigue d'un bouclier thermique dans un compartiment moteur d'un véhicule automobile.

Un troisième objectif est d'accroître la durée de vie des composants isolés thermiquement du compartiment moteur.

A cet effet, il est proposé, en premier lieu, un bouclier thermique pour la protection d'un objet contre la chaleur régnant dans un compartiment moteur d'un véhicule automobile, ce bouclier ayant une face externe destinée à être positionnée en regard du composant et comprenant une patte formée en saillie sur la face externe, cette patte comprenant un coussinet formant une surface d'appui contre le composant.

Lorsqu'il est monté, le bouclier peut ainsi être en appui contre le composant. Il en résulte une meilleure stabilité du bouclier, sans qu'il soit nécessaire de prévoir des trous de fixation supplémentaires dans le compartiment moteur.

Diverses caractéristiques supplémentaires peuvent être prévues, seules ou en combinaison :
- la patte est venue de matière ;
- la patte comprend un coussinet souple formant la surface d'appui ;
- le coussinet est formé par surmoulage ;
- le coussinet est réalisé dans un élastomère ;
- le bouclier présente une paroi latérale percée de trous de fixation à une cloison du compartiment moteur.

Il est proposé, en deuxième lieu, un véhicule automobile comprenant un compartiment moteur, un composant à protéger de la chaleur régnant dans le compartiment moteur, et un tel bouclier thermique interposé entre le compartiment moteur et le composant, ce bouclier étant en appui contre le composant par sa patte en saillie.

D'autres objets et avantages de l'invention apparaîtront à la lumière de la description d'un mode préféré de réalisation, faite ci-après en référence aux dessins annexés dans lesquels :
- la figure 1 est une vue schématique de côté montrant la partie avant d'un véhicule automobile, du côté de l'aile avant gauche ;
- la figure 2 est une vue en coupe longitudinale illustrant un bouclier thermique associé à un composant à protéger ;
- la figure 3 est une vue en perspective de dessus du bouclier thermique de la figure 2 ;
- la figure 4 est une vue en perspective de dessous montrant le bouclier surmontant le composant à protéger.

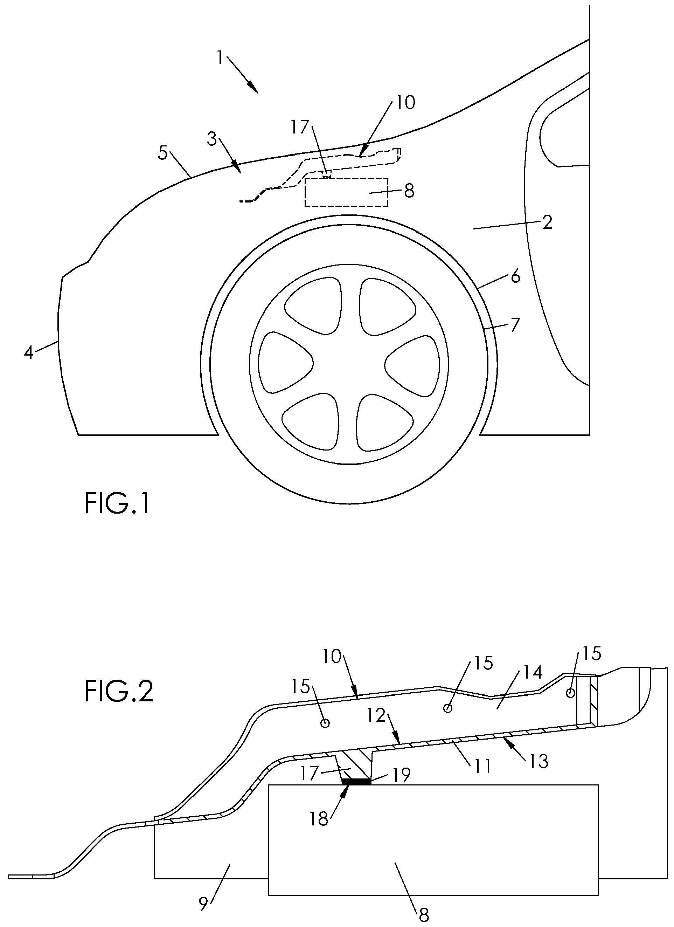

Sur la figure 1 est partiellement représenté un véhicule 1 automobile, au niveau d'une aile 2 avant gauche. Il s'agit en l'espèce d'un véhicule de type berline, mais il pourrait s'agir d'un utilitaire (fourgon, fourgonnette, camionnette).

Le véhicule 1 comprend un compartiment 3 moteur délimité vers l'avant par un pare-chocs 4, vers le haut par un capot 5 moteur, et sur le côté par l'aile 2 avant qui définit un passage 6 pour une roue 7 avant.

Dans le compartiment 3 moteur sont montés des composants dont le fonctionnement est prévu pour être optimal sur des plages de températures prédéterminées. Dans l'exemple illustré, le véhicule 1 comprend un système d'arrêt et de redémarrage automatique du moteur, connu sous la dénomination « stop & start ». Ce système comprend un condensateur 8 de forte capacité qui emmagasine l'électricité nécessaire aux fréquents redémarrages. Ce condensateur 8, qui présente un corps cylindrique, est monté dans un espace ménagé sur un côté (en l'occurrence sur le côté gauche) du compartiment 3, au-dessus de la roue 7 avant.

Le condensateur 8 est prévu pour fonctionner à une température ambiante ne dépassant pas 50°C environ. Le condensateur 8 est séparé latéralement du compartiment 3 moteur par une cloison 9 qui s'étend à la fois verticalement et longitudinalement. Cette cloison 9 n'isole toutefois pas complètement le condensateur 8 du moteur.

A cet effet, le véhicule 1 est équipé d'un bouclier 10 thermique sous forme d'un capot interposé entre le compartiment 3 moteur et le condensateur 8 qu'il vient coiffer pour le protéger de la chaleur dégagée par le moteur et régnant dans le compartiment 3 moteur.

Ce bouclier 10, réalisé de préférence dans une matière plastique présentant une bonne résistance mécanique ainsi qu'une bonne résistance à la chaleur (par ex. un polyoxyméthylène ou POM), peut être revêtu d'une doublure dans un matériau isolant tel qu'une laine de verre ou de roche.

Le bouclier 10 comprend une paroi 11 de fond ayant une face 12 supérieure (ou interne), tournée vers le capot 5, et exposée à la chaleur du moteur, et une face 13 inférieure (ou externe) opposée positionnée en regard du condensateur 8.

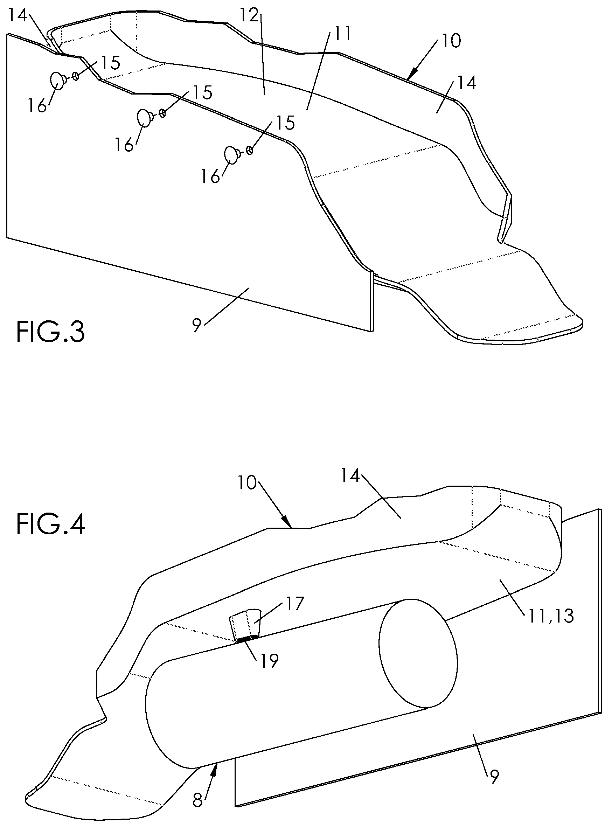

Comme cela est visible sur la figure 3, le bouclier 10 comprend une paroi 14 latérale qui s'étend sur une partie au moins du pourtour de la paroi 11 de fond. D'un côté intérieur, la paroi 14 latérale est percée de trous 15 pour la fixation du bouclier 10 sur la cloison 9, laquelle est également percée de trous en regard. Cette fixation peut être réalisée au moyen de pièces 16 de fixation telles que des rivets, des agrafes ou encore des vis. A l'opposé de la cloison 9, le bouclier peut être en simple contact avec l'aile 2 avant, sans pour autant être fixé à celle-ci.

Afin de garantir le montage isostatique du bouclier 10, et éviter son extension en porte-à-faux à partir de la cloison 9, le bouclier 10 est muni d'une patte 17 formée en saillie sur la face 13 inférieure, cette patte 17 définissant une surface 18 d'appui contre le corps cylindrique du condensateur 8.

Cette patte 17 peut être rapportée en étant fixée sur la paroi 11 de fond du bouclier 10, mais selon un mode préféré de réalisation elle est venue de matière en formant avec la paroi 11 de fond un ensemble monobloc. En pratique, la patte 17 est venue de moulage.

La patte 17 est en simple appui contre le condensateur 8, et maintient ainsi un écartement constant entre celui-ci et le bouclier 10. Cet écartement ménage entre le bouclier 10 et le condensateur 8 un espace qui permet une circulation d'air favorable à un refroidissement du condensateur 8.

Selon un mode préféré de réalisation illustré sur les figures, et visible notamment sur les figures 2 et 4, la patte 17 comprend, à son extrémité libre opposée à la paroi 11 de fond, un coussinet 19 souple qui forme la surface 18 d'appui contre le condensateur 8.

Grâce au coussinet 19 :
- premièrement, la patte 17 peut épouser convenablement le corps cylindrique du condensateur 8 ;
- deuxièmement, la patte 17 sert d'amortisseur aux éventuelles vibrations qui pourraient générer dans le bouclier 10 des cycles de contraintes susceptibles de l'user prématurément par fatigue.

Le coussinet 19 peut être réalisé par surmoulage. Il s'agit par exemple d'un élastomère tel qu'un caoutchouc naturel ou de synthèse (par ex. un composé éthylène-propylène, connu pour ses résistance aux agents atmosphériques).

Afin de renforcer la structure, le bouclier 10 peut être muni de plusieurs pattes qui prennent appui sur différentes zones du condensateur 8.

Le bouclier 10 thermique qui vient d'être décrit présente les avantages suivants :
- Premièrement, grâce à sa patte 17, en appui contre le condensateur 8, le montage du bouclier 10 est isostatique et donc stable. Il en résulte une diminution des risques d'usure prématurée en raison de cycles de contraintes (notamment en flexion).
- Deuxièmement, la présence du coussinet 19 permet de réduire substantiellement les vibrations auxquelles sont soumises tant le bouclier 10 que le composant 8 qu'il protège.
- Troisièmement, en corollaire de l'avantage précédent, l'absorption des vibrations permet de réduire les bruits parasites en provenance du moteur, au bénéfice du confort de conduite du véhicule.

## Revendications

1. Bouclier (10) thermique pour la protection d'un objet (8) contre la chaleur régnant dans un compartiment (3) moteur d'un véhicule (1) automobile, ce bouclier (10) ayant une face (13) externe destinée à être positionnée en regard du composant (8), une patte (17) formée en saillie sur la face (13) externe, cette patte (17) définissant une surface (18) d'appui contre le composant (8), le bouclier (10) étant **caractérisé en ce que** la patte (17) comprend un coussinet (19) souple formant la surface (13) d'appui.

2. Bouclier (10) thermique selon la revendication 1, **caractérisé en ce que** la patte (17) est venue de matière.

3. Bouclier (10) thermique selon l'une des revendications précédentes, **caractérisé en ce que** le coussinet (17) est formé par surmoulage.

4. Bouclier (10) thermique selon l'une des revendications précédentes, **caractérisé en ce que** le coussinet (17) est réalisé dans un élastomère.

5. Bouclier (10) thermique selon l'une des revendications précédentes, **caractérisé en ce qu'**il présente une paroi (14) latérale percée de trous (15) de fixation à une cloison (9) du compartiment (3) moteur.

6. Véhicule (1) automobile comprenant un compartiment (3) moteur, un composant (8) à protéger de la chaleur régnant dans le compartiment (3) moteur, **caractérisé en ce qu'**il comprend un bouclier (10) thermique selon l'une des revendications précédentes, interposé entre le compartiment (3) moteur et le composant (8), ce bouclier (10) étant en appui contre le composant (8) par sa patte (17) en saillie.

## Patentansprüche

1. Hitzeschild (10) zum Schutz eines Gegenstandes (8) gegen die Hitze, die in einem Motorraum (3) eines Kraftfahrzeuges (1) vorherrscht, wobei dieser Hitzeschild (10) eine Außenseite (13) aufweist, die dazu bestimmt ist, gegenüber dem Bauteil (8) positioniert zu werden, eine Lasche (17), die auf der Außenseite (13) hervorstehend ausgebildet ist, wobei diese Lasche (17) eine Auflagefläche (18) auf dem Bauteil (8) bildet, wobei der Schild (10) **dadurch gekennzeichnet ist, dass** die Lasche (17) ein flexibles Lagerkissen (19) umfasst, das die Auflagefläche (13) bildet.

2. Hitzeschild (10) nach Anspruch 1, **dadurch gekennzeichnet, dass** die Lasche (17) aus dem gleichen Werkstoff ist.

3. Hitzeschild (10) nach einem der vorherigen Ansprüche, **dadurch gekennzeichnet, dass** das Lagerkissen (17) durch Überformen gebildet wird.

4. Hitzeschild (10) nach einem der vorherigen Ansprüche, **dadurch gekennzeichnet, dass** das Lagerkissen (17) aus einem Elastomer gefertigt ist.

5. Hitzeschild (10) nach einem der vorherigen Ansprüche, **dadurch gekennzeichnet, dass** er eine Seitenwand (14) aufweist, in die Löcher (15) zum Befestigen an einer Wand (9) des Motorraums (3) gebohrt ist.

6. Kraftfahrzeug (1), einen Motorraum (3) und ein Bauteil (8) umfassend, das gegen die Hitze zu schützen ist, die in einem Motorraum (3) vorherrscht, **dadurch gekennzeichnet, dass** es einen Hitzeschild (10) nach einem der vorherigen Ansprüche umfasst, der zwischen dem Motorraum (3) und dem Bauteil (8) angeordnet ist, wobei dieser Hitzeschild (10) durch seine hervorstehende Lasche (17) am Bauteil (8) anliegt.

## Claims

1. Heat shield (10) for protecting an object (8) from the heat pervading an engine compartment (3) of a motor vehicle (1), said shield (10) having an outer surface (13) that is to be positioned opposite the component (8), a lug (17) that is formed so as to project onto the outer surface (13), said lug (17) defining a surface (18) for bearing against the component (8), the shield (10) being **characterised in that** the lug (17) includes a flexible pad (19) forming the bearing surface (13).

2. Heat shield (10) according to claim 1, **characterised in that** the lug (17) is formed integrally in one piece.

3. Heat shield (10) according to one of the previous claims, **characterised in that** the pad (17) is formed by cast moulding.

4. Heat shield (10) according to one of the previous claims, **characterised in that** the pad (17) is made from an elastomer.

5. Heat shield (10) according to one of the previous claims, **characterised in that** it has a side wall (14) bored with holes (15) for fastening to a partition wall (9) of the engine compartment (3).

6. Motor vehicle (1) comprising an engine compartment (3) and a component (8) to be protected from the heat pervading the engine compartment (3), **characterised in that** it includes a heat shield (10) according to one of the previous claims, inserted between the engine compartment (3) and the component (8), said shield (10) bearing against the component (8) via its projecting lug (17).
